(19) **Europäisches Patentamt**
**European Patent Office**
**Office européen des brevets**

(11) **EP 2 911 293 B1**

(12) **EUROPÄISCHE PATENTSCHRIFT**

(45) Veröffentlichungstag und Bekanntmachung des Hinweises auf die Patenterteilung:
**16.01.2019 Patentblatt 2019/03**

(51) Int Cl.:
*H02P 21/00* *(2016.01)*      *H02P 6/18* *(2016.01)*

(21) Anmeldenummer: **15153157.1**

(22) Anmeldetag: **30.01.2015**

(54) **Drehfeldmaschine und Verfahren zum Bestimmen der Winkelposition ihres Rotors**

Rotating field machine and method for determining the angular position of its rotor

Générateur à champ tournant et procédé de détermination de la position angulaire de son rotor

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2014 DE 102014102376**

(43) Veröffentlichungstag der Anmeldung:
**26.08.2015 Patentblatt 2015/35**

(73) Patentinhaber: **Jenaer Antriebstechnik GmbH 07745 Jena (DE)**

(72) Erfinder:
• **König, Christian**
**99897 Tambach-Dietharz (DE)**
• **Förster, Matthias**
**07907 Plothen (DE)**

(74) Vertreter: **Engel, Christoph Klaus PATENTSCHUTZengel Marktplatz 6 98527 Suhl (DE)**

(56) Entgegenhaltungen:
• **C. Silva ET AL: "Sensorless Rotor Position Control in a Surface Mounted PM Machine Using HF Rotating Injection", , Bd. 13, Nr. 3 1. August 2003 (2003-08-01), Seiten 12-18, XP055231380, DOI: 10.1007/978-3-642-32557-1 ISBN: 978-3-642-32556-4 Gefunden im Internet: URL:http://www.epe-association.org/epe/documents.download.php?type=view&documents_ id =784 [gefunden am 2015-11-25]**
• **Héctor Perassi: "Feldorientierte Regelung der permanenterregten Synchronmaschine ohne Lagegeber für den gesamten Drehzahlbereich bis zum Stillstand", , 4. Juli 2007 (2007-07-04), XP055042999, Gefunden im Internet: URL:http://www.db-thueringen.de/servlets/D erivateServlet/Derivate-13770/ilm1-2007000 172.pdf [gefunden am 2012-11-02]**

EP 2 911 293 B1

**Beschreibung**

Die vorliegende Erfindung betrifft zunächst ein Verfahren zum geberlosen Bestimmen der absoluten Winkelposition eines Rotors einer mehrphasigen Drehfeldmaschine. Im Weiteren betrifft die Erfindung eine mehrphasige Drehfeldmaschine, bei welcher die Winkelposition ihres Rotors geberlos messbar ist.

In der Dissertation von Perassi, H. D.: "Feldorientierte Regelung der permanenterregten Synchronmaschine ohne Lagegeber für den gesamten Drehzahlbereich bis zum Stillstand", Technische Universität Ilmenau, ISLE Verlag Ilmenau, 2007, sind in den Abschnitten 2.3.2.2 und 2.3.2.3 verschiedene Verfahren zur Rotorlagenbestimmung basierend auf einer hochfrequenten Signaleinprägung vorgestellt.

Die WO 2011/026988 A2 zeigt ein Verfahren zur Rotorpositionsermittlung bei geringer Drehzahl oder Stillstand, bei welchem ein HF-Signal im Sternpunkt der Statorspulen eingespeist wird. Die Ermittlung der Rotorlage erfolgt durch Auswertung der hochfrequenten Stromantwort, indem die Informationen mittels spezieller Abtastung oder Vektordrehung und nachfolgender Arctan-Bildung ermittelt wird. Eine Winkelhalbierung und Polaritätsbestimmung sind notwendig.

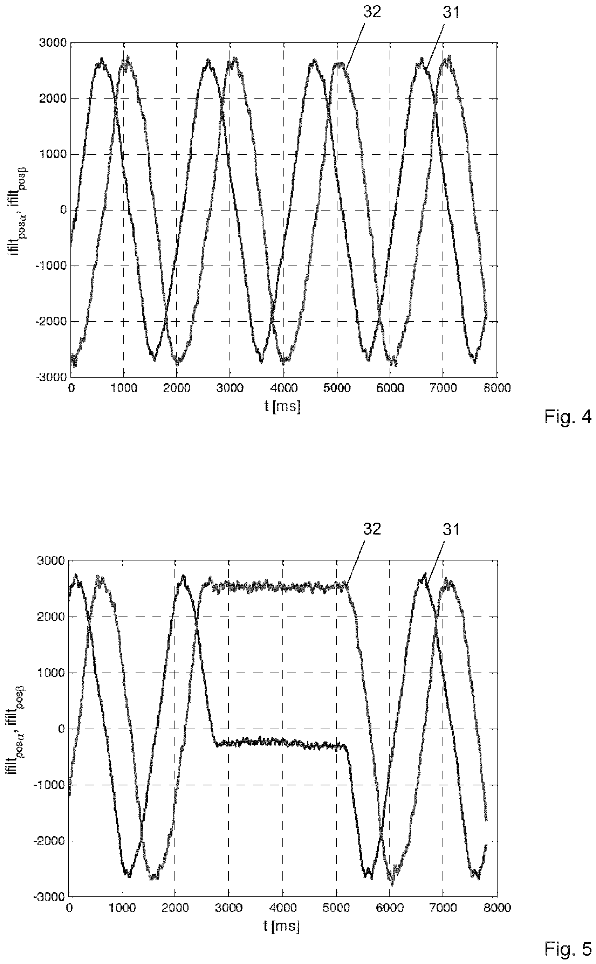

Die WO 2004/019269 A2 lehrt ein Verfahren zur Bestimmung der Position eines Synchronmotors. Bei diesem Verfahren wird ein kontinuierlicher HF-Träger in den Motor eingespeist. Die Winkelinformation wird aus den Stromantworten mittels entsprechender Filterung (Fig. 4) und Phasenregelkreisen (Fig. 5) gewonnen. Die magnetische Polarität wird aus der zweiten Harmonischen des hochfrequenten Signales ermittelt.

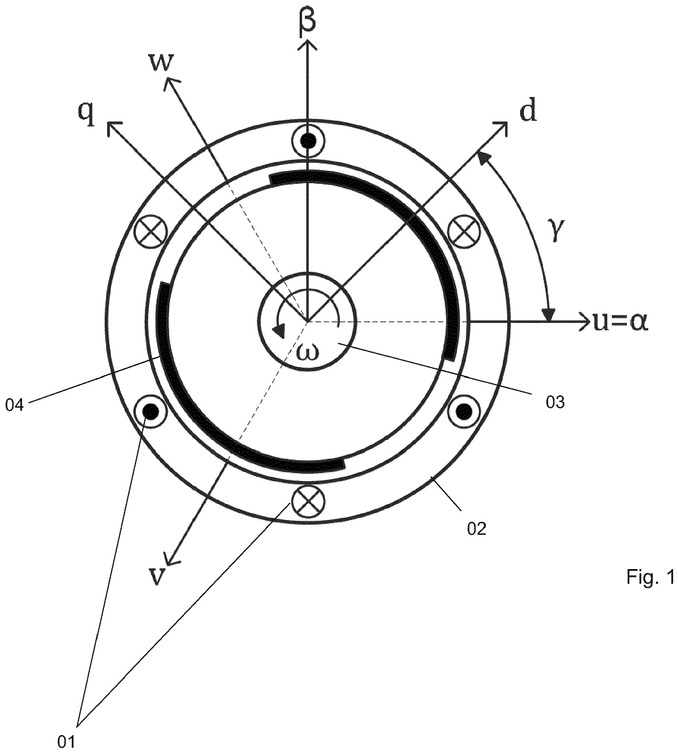

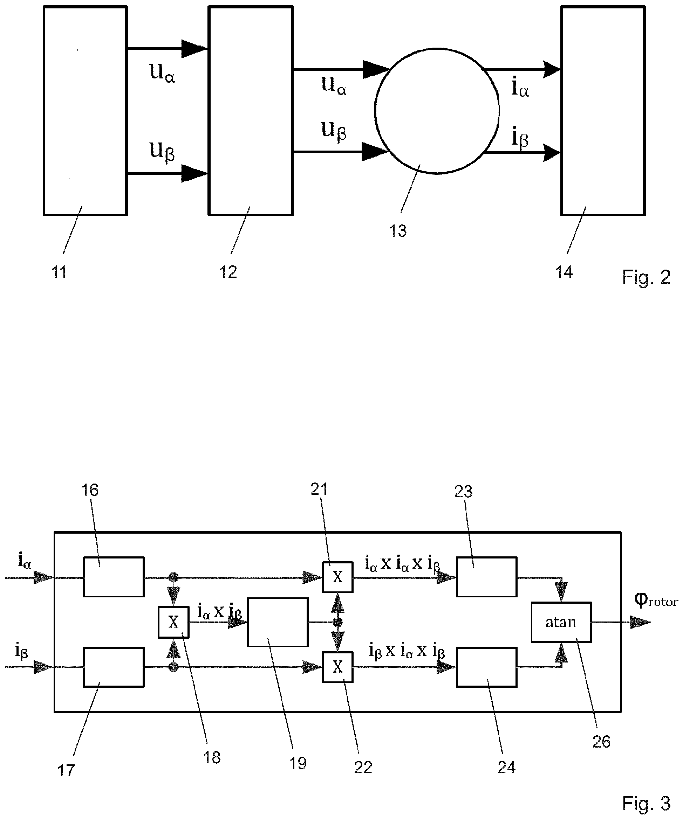

Aus der WO 02/39575 A2 ist ein Verfahren zum geberlosen Betrieb eines Synchronmotors eines Aufzuges bekannt. Bei diesem Verfahren wird zusätzlich zu den Strömen im dq-Koordinatensystem für die feldorientierte Regelung ein hochfrequenter Strom in die d- oder q-Achse überlagert eingespeist und es wird die hochfrequente Antwort im entsprechenden anderen Stromzweig ausgewertet, um die Rotorposition (Positionsfehler) zu ermitteln. Zur Auswertung werden Filter (Fig. 2) und eine Beobachterstruktur (Fig. 1) verwendet.

Die EP 1 944 860 B9 zeigt ein Verfahren zur geberlosen Schätzung der Position einer synchronen Permanentmagnetmaschine, bei welchem die Rotorposition nur aus der Messung des Zwischenkreisstromes (DC-Link) ermittelt wird. Die Ermittlung erfolgt über eine Beobachterstruktur. Bei diesem Verfahren wird ein hochfrequentes Signal mit einer Längs- und einer Querkomponente (dq-Koordinatensystem) mit unterschiedlichen Frequenzen eingespeist.

Die US 7,034,497 B2 zeigt ein Verfahren zur sensorlosen Bestimmung der Winkelposition eines Rotors einer Synchronmaschine, bei welchem ein hochfrequentes Signal im $\alpha\beta$-Koordinatensystem mit einer variablen Frequenz eingespeist wird. Unter einer variablen Frequenz werden hier zum einen die Umschaltung der Frequenz zwischen zwei Arbeitsbereichen und zum anderen die gleichzeitige Einspeisung von zwei hochfrequenten Systemen mit unterschiedlichen Frequenzen verstanden. Die Ermittlung erfolgt entsprechend dem Verfahren der Auswertung in der synchronen Referenzfilterung, d. h. im synchronen Referenzsystem. Eine Polaritätsbestimmung muss zusätzlich durchgeführt werden.

Aus der DE 10 2007 003 874 A1 ist ein Verfahren zum geberlosen Betrieb einer unsymmetrischen Drehfeldmaschine bekannt, bei welchem ein Testsignal in Richtung einer vermuteten Flussachse eingespeist (Fig. 1) und die geschätzte Flusslage fortlaufend korrigiert wird. Das hochfrequente Signal wird in einer weiteren Ausführungsform auch auf die q-Achse (Drehmomentachse) eingespeist, wobei die Frequenzen der beiden Testsignalkomponenten unterschiedlich sein können (Fig.5). Die erste Komponente besitzt einen ganzzahligen n-ten Frequenzanteil der Schaltfrequenz und die zweite Komponente besitzt einen vielfachen Anteil der Grundfrequenz. Zusätzlich kann parallel zu diesen Komponenten ein zweites System (Fig. 5) von hochfrequenten Testsignalen eingespeist werden. Eine Bestimmung der Rotorposition ist nicht im Detail beschrieben, sondern es ist auf die DE 10 2006 004 034 A1 verwiesen.

Aus dem Artikel von Kim, H.; Huh, K.-K.; Lorenz, R. D. und Jahns, T. M.: "A Novel Method for Initial Rotor Position Estimation for IPM Synchronous Machine Drives" in IEEE Trans. On Ind. Appl., Jahrgang 40, Nr. 5, 2004, ist ein Verfahren zur Bestimmung der anfänglichen Position eines Rotors einer Synchronmaschine bekannt, bei welchem Effekte der magnetischen Sättigung und der räumlichen Verteilung des magnetischen Flusses genutzt werden. Die Stromantwort eines hochfrequenten Testsignals wird ausgewertet. Die Rotorlage und magnetische Polarität werden über Beobachterstrukturen ermittelt. Die Änderung der Induktivität wird durch Modellierung der Induktivität mittels Taylorreihe realisiert. Dadurch sind in den hochfrequenten Strömen Anteile enthalten, welche die zweite Harmonische des HF-Signals mit überlagerte erster und dritter Harmonischer der Rotorfrequenz besitzen.

In dem Artikel von Harke, M. C.; Raca, D. und Lorenz, R. D.: "Implementation Issues for Fast Initial Position and Magnet Polarity Identification of PM Synchronous Machines with Near Zero Saliency" in European Conference on Power Electronics and Applications, Dresden, 2005, ist die Umsetzung eines Verfahrens zur Bestimmung der anfänglichen Position eines Rotors einer Synchronmaschine vorgestellt. Die notwendige Stromkomponente wird durch Separation der einzelnen Stromanteile mittels Filtertechnik und Vektordrehern ermittelt. Die Rotorlage wird über eine Beobachterstruktur bzw. über einen Phasenregelkreis bestimmt.

Die US 8,159,161 B2 zeigt eine Motorsteuerung, die auf der Bestimmung der Position der magnetischen Pole beruht. Hierfür wird der Motor mit einer hochfrequenten Spannung beaufschlagt, welche sich mit der Winkelgeschwindigkeit $\omega_h$ um die Achse des Motors dreht. Gleichzeitig werden die durch die hochfrequente Spannung bewirkten Ströme gemessen. In einem Koordinatenkonverter (12b in Fig. 16) werden die auf das $\alpha$-$\beta$-Koordinatensystem bezogenen Ströme $i_\alpha$ und $i_\beta$ bestimmt. Die Ströme $i_\alpha$ und $i_\beta$ werden mit Bandpassfiltern (71, 72 in Fig. 17) gefiltert, um die $\omega_h$-Anteile $i_{h\alpha}$ und $i_{h\beta}$ zu erhalten, welche in einem Multiplikator (73) zu dem Produkt $i_{h\alpha} \times i_{h\beta}$ multipliziert werden. In einem weiteren Multiplikator (75) wird das Produkt $(i_{h\alpha} + i_{h\beta}) \times (i_{h\alpha} - i_{h\beta})$ gebildet. Die beiden Produkte werden mit Tiefpässen (74, 76) tiefpassgefiltert, um die Gleichanteile der beiden Produkte (Spalte 20, Zeile 65 bis Spalte 21, Zeile 11) zu extrahieren. Aus diesen Gleichanteilen wird in einer Verarbeitungseinheit (78) ein Arkustangens (Spalte 12, Formeln C-6 bis C-8) bestimmt, welcher die zu bestimmende Winkelposition der magnetischen Pole darstellt. Nachteilig an dieser Lösung ist u. a. der erhöhte Aufwand für die Bildung des Produktes $(i_{h\alpha} + i_{h\beta}) \times (i_{h\alpha} - i_{h\beta})$.

Die DE 103 27 599 A1 zeigt ein Verfahren zur Bestimmung der Lage des Flussmaximums eines Synchronmotors. Der Synchronmotor wird mit Spannungsimpulsen mit gleicher Spannungszeitfläche beaufschlagt und deren Wirkungsrichtung durch Drehung eines Spannungsraumzeigers in definierten Gradabständen über eine volle Umdrehung variiert. Mit jedem Spannungsimpuls wird ein Stromanstieg des Motorstroms ermittelt. Durch digitale Filterung des Stromanstieges werden die Fourierkoeffizienten der ersten Harmonischen des Stromanstieges ermittelt, wodurch die Lage des Flussmaximums bestimmt wird.

In dem Artikel von Silva, C. et al.: "Sensorless Rotor Position Control in a Surface Mounted PM Machine Using HF Rotation Injection" in EPE Journal, Band 13, Nr. 3, 1. August 2003, Seiten 12 bis 18 ist die Einspeisung einer HF-Spannung in eine Permanentmagnetmaschine beschrieben, um auf der Basis von Strommessungen die Winkelposition der Permanentmagnetmaschine zu bestimmen. Die HF-Spannung wird in Bezug auf das stationäre $\alpha$-$\beta$-Koordinatensystem eingespeist. Die zu messenden Ströme werden ebenfalls in Bezug auf das stationäre $\alpha$-$\beta$-Koordinatensystem bestimmt.

Die Aufgabe der vorliegenden Erfindung besteht ausgehend vom Stand der Technik darin, den Aufwand für das Bestimmen der absoluten Winkelposition eines sich drehenden oder stillstehenden Rotors einer mehrphasigen Drehfeldmaschine deutlich zu senken.

Die genannte Aufgabe wird gelöst durch ein Verfahren gemäß dem beigefügten Anspruch 1.

Das erfindungsgemäße Verfahren dient zum geberlosen Bestimmen der absoluten Winkelposition eines Rotors einer mehrphasigen Drehfeldmaschine. Bei der Drehfeldmaschine kann es sich beispielsweise um einen Motor oder um einen Generator handeln. Die Drehfeldmaschine kann als eine Außenläufermaschine oder als eine Innenläufermaschine ausgeführt sein; beispielsweise als ein Außenläufermotor oder als ein Innenläufermotor. Die Drehfeldmaschine besitzt mehrere Phasen, nämlich n Phasen mit $n \geq 2$. Entsprechend besitzt die Drehfeldmaschine n Elektromagnetspulen, die bevorzugt auf einem Stator verteilt sind. Der Rotor umfasst bevorzugt einen Dauermagneten. Die Anzahl n der Phasen ist bevorzugt n = 3, jedoch kann auch n = 2 oder n > 3 sein. Insofern es sich bei der Drehfeldmaschine um einen Motor handelt, werden die n Elektromagneten mit einem Antriebsstrom bestromt, um den Motor anzutreiben. Insofern es sich bei der Drehfeldmaschine um einen Generator handelt, wird durch ein äußeres Antreiben der Drehfeldmaschine in den n Elektromagneten ein Generatorstrom erzeugt.

In einem Schritt des erfindungsgemäßen Verfahrens wird ein Drehfeld in der Drehfeldmaschine mithilfe eines mehrphasigen Testsignals erzeugt, indem die n Elektromagnetspulen mit dem mehrphasigen Testsignal beaufschlagt werden. Bei dem Drehfeld handelt es sich um ein Magnetfeld, welches sich um die Rotorachse der Drehfeldmaschine dreht. Das mehrphasige Testsignal kann einem Antriebsstrom bzw. einem Generatorstrom überlagert sein oder alternativ zum Antriebsstrom bzw. Generatorstrom an die n Elektromagnetspulen angelegt werden. Das mehrphasige Testsignal ist als hochfrequent anzusehen, da die elektrische Frequenz des Testsignals größer als die elektrische Frequenz des Antriebsstromes bzw. des Generatorstromes ist. Bevorzugt ist die elektrische Frequenz des Testsignals mehr als doppelt so groß wie die elektrische Frequenz des Antriebsstromes bzw. des Generatorstromes. Bevorzugt ist die elektrische Frequenz des Testsignals so groß, dass eine Beeinflussung durch ein entstehendes Drehmoment nicht vorhanden ist, d. h. die Periodendauer des Testsignals muss unterhalb einer mechanischen Zeitkonstante liegen.

Das mehrphasige Testsignal bewirkt in den n Elektromagnetspulen jeweils einen Phasenstrom. Die einzelnen Phasenströme werden gemessen.

In einem weiteren Schritt werden zwei auf ein zweiphasiges System bezogene Stromwerte $i_\alpha$ und $i_\beta$ aus den gemessenen n Phasenströmen bestimmt. Das zweiphasige System liegt bevorzugt in einer senkrecht zur Drehachse ausgerichteten Ebene. Insofern es sich um eine zweiphasige Drehfeldmaschine handelt, sind die beiden gemessenen Phasenströme bereits auf ein zweiphasiges System bezogen, sodass das Bestimmen der beiden Stromwerte $i_\alpha$ und $i_\beta$ dadurch erfolgt, dass die beiden gemessenen Phasenströme ohne Änderung als Stromwerte $i_\alpha$ und $i_\beta$ übernommen werden. Ist n > 2, so erfolgt das Bestimmen der beiden Stromwerte $i_\alpha$ und $i_\beta$ insbesondere durch eine Konvertierung bzw. Transformation der gemessenen n Phasenströme. Für den Fall n = 3 erfolgt das Bestimmen der beiden auf ein zweiphasiges System bezogenen Stromwerte $i_\alpha$ und $i_\beta$ aus den gemessenen drei Phasenströmen bevorzugt durch ein Anwenden der Clarke-Transformation auf die drei Phasenströme.

Erfindungsgemäß werden aus den beiden Stromwerten $i_\alpha$ und $i_\beta$ zwei Produkte $i_\alpha \cdot i_\alpha \cdot i_\beta$ und $i_\beta \cdot i_\alpha \cdot i_\beta$ bestimmt. Diese beiden Produkte können auch als $i_\alpha^2 \cdot i_\beta$ und $i_\beta^2 \cdot i_\alpha$ beschrieben werden. In die Faktoren der beiden Produkte fließen zumindest spektrale Anteile der beiden Stromwerte $i_\alpha$ und $i_\beta$ ein. Das Produkt $i_\alpha \cdot i_\alpha \cdot i_\beta$ umfasst drei Faktoren,

wobei ein erster Faktor zumindest spektrale Anteile von $i_\alpha$ umfasst, wobei ein zweiter Faktor zumindest spektrale Anteile von $i_\alpha$ umfasst und wobei ein dritter Faktor zumindest spektrale Anteile von $i_\beta$ umfasst. Das Produkt $i_\beta \cdot i_\alpha \cdot i_\beta$ umfasst drei Faktoren, wobei ein erster Faktor zumindest spektrale Anteile von $i_\beta$ umfasst, wobei ein zweiter Faktor zumindest spektrale Anteile von $i_\alpha$ umfasst und wobei ein dritter Faktor zumindest spektrale Anteile von $i_\beta$ umfasst. In die Faktoren der beiden Produkte $i_\alpha \cdot i_\alpha \cdot i_\beta$ und $i_\beta \cdot i_\alpha \cdot i_\beta$ müssen jeweils nur spektrale Anteile der beiden Stromwerte $i_\alpha$ und $i_\beta$ einfließen, da andere spektrale Anteile, wie beispielsweise ein Gleichanteil oder Anteile, die mit der Frequenz des Antriebsstromes bzw. des Generatorstromes im Zusammenhang stehen, für die Bestimmung der Winkelposition des Rotors nicht benötigt werden.

In einem weiteren Schritt des erfindungsgemäßen Verfahrens wird ein Arkusfunktionswert für einen Quotienten aus den gebildeten Produkten $i_\alpha \cdot i_\alpha \cdot i_\beta$ und $i_\beta \cdot i_\alpha \cdot i_\beta$ bestimmt. Der Arkusfunktionswert stellt die zu bestimmende Winkelposition des Rotors dar. Bei der Arkusfunktion handelt es sich bevorzugt um den Arkustangens oder um den Arkuskotangens. Bevorzugt wird der Arkustangens für den Quotienten $(i_\beta \cdot i_\alpha \cdot i_\beta) / (i_a \cdot i_\alpha \cdot i_\beta)$ bestimmt. Bei der Bestimmung des Arkusfunktionswertes wird bevorzugt die Phasenlage der beiden Produkte $i_\alpha \cdot i_\alpha \cdot i_\beta$ und $i_\beta \cdot i_\alpha \cdot i_\beta$ berücksichtigt, sodass der resultierende Arkusfunktionswert zwischen 0° und 360° bzw. zwischen 0 und $2\pi$ definiert ist. Das Berücksichtigen der Phasenlage der beiden Produkte $i_\alpha \cdot i_\alpha \cdot i_\beta$ und $i_\beta \cdot i_\alpha \cdot i_\beta$ erfolgt bevorzugt dadurch, dass die beiden Stromwerte $i_\alpha$ und $i_\beta$ sowie deren Produkte, Quotienten usw. als komplexe Größen verarbeitet werden.

Ein besonderer Vorteil des erfindungsgemäßen Verfahrens besteht darin, dass die Winkelpositionsbestimmung lediglich eine aufwandsarm durchzuführende Produktbildung von $i_\alpha$ und $i_\beta$ in Vorbereitung der Arkusfunktionswertbestimmung erfordert. Es müssen beispielsweise keine Summen und Differenzen von $i_\alpha$ und $i_\beta$ bestimmt werden. Das erfindungsgemäße Verfahren beruht u. a. darauf, dass in den Stromantworten bzw. in den gemessenen Strömen $i_\alpha$ und $i_\beta$ die zweite Harmonische des HF-Testsignals mit überlagerter erster und dritter Harmonischer der Rotorfrequenz enthalten ist. Grundlage hierfür bilden Sättigungseffekte im Statoreisen. Die Komponenten der Statorflussverkettung und die Komponenten des Statorstromes sind wegen der Sättigung im Statoreisen nichtlinear miteinander verknüpft. Hierdurch ist der Induktivitätswert der einzelnen Elektromagnetspulen vom Magnetisierungszustand des Eisenkernes der jeweiligen Elektromagnetspule abhängig. Eine weitere Grundlage der Messung können Asymmetrien im Rotor bilden.

Das erfindungsgemäße Verfahren ist für Drehfeldmaschinen mit ausgeprägten Polen, d. h. für Schenkelpolmaschinen anwendbar. Das erfindungsgemäße Verfahren ist auch für Drehfeldmaschinen ohne ausgeprägte Pole, d. h. für Vollpolmaschinen anwendbar.

Das erfindungsgemäße Verfahren wird bevorzugt zur feldorientierten Regelung der Drehfeldmaschine angewendet, insbesondere zur Drehmomentregelung, zur Drehzahlregelung und/oder zur Lageregelung, d. h. zur Regelung der Winkelposition des Rotors. Die Drehzahl lässt sich mithilfe des erfindungsgemäßen Verfahrens dadurch bestimmen, dass die ermittelte Winkelposition zeitlich abgeleitet wird. Das erfindungsgemäße Verfahren kann auch für eine ausschließliche Bestimmung der Anfangsposition des Rotors genutzt werden, um einen Motor in Betrieb zu nehmen bzw. die Winkellage des Rotors zu ermitteln.

Für das Bilden der beiden Produkte $i_\alpha \cdot i_\alpha \cdot i_\beta$ und $i_\beta \cdot i_\alpha \cdot i_\beta$ wird bevorzugt zunächst das Produkt $i_\alpha \cdot i_\beta$ gebildet, welches anschließend jeweils mit $i_\alpha$ bzw. $i_\beta$ multipliziert wird.

Die beiden Stromwerte $i_\alpha$ und $i_\beta$ werden vor der Bildung der beiden Produkte $i_\alpha \cdot i_\alpha \cdot i_\beta$ und $i_\beta \cdot i_\alpha \cdot i_\beta$ bevorzugt zunächst jeweils mit einem Hochpass gefiltert. Der auf $i_\alpha$ angewendete Hochpass und der auf $i_\beta$ angewendete Hochpass sind bevorzugt gleich ausgebildet. Durch diese beiden Hochpassfilterungen werden zum einen die Gleichanteile und zum anderen diejenigen spektralen Anteile, welche in der Größenordnung der Frequenz des Antriebsstromes bzw. des Generatorstromes liegen, entsprechend den Zeitkontanten gefiltert, d. h. gelöscht bzw. zumindest gedämpft.

Insofern für die Produktbildung zunächst das Produkt $i_\alpha \cdot i_\beta$ gebildet wird, so wird dieses Produkt vor der weiteren Produktbildung bevorzugt mit einem dritten Hochpass gefiltert. Auch der dritte Hochpass dient dazu, den Gleichanteil und diejenigen spektralen Anteile, welche in der Größenordnung der Frequenz des Antriebsstromes bzw. des Generatorstromes liegen, aus dem Produkt $i_\alpha \cdot i_\beta$ zu filtern, nämlich zu löschen oder zumindest zu dämpfen.

Die beiden Produkte $i_\alpha \cdot i_\alpha \cdot i_\beta$ und $i_\beta \cdot i_\alpha \cdot i_\beta$ werden vor der Bestimmung ihres Quotienten bevorzugt jeweils mit einem Tiefpass gefiltert. Der auf das Produkt $i_\alpha \cdot i_\alpha \cdot i_\beta$ angewendete Tiefpass und der auf das Produkt $i_\beta \cdot i_\alpha \cdot i_\beta$ angewendete Tiefpass sind bevorzugt gleich ausgebildet. Durch diese beiden Tiefpassfilterungen werden diejenigen spektralen Anteile der beiden Produkte, welche in der Größenordnung der elektrischen Frequenz des Testsignals und darüber liegen, entsprechend den Zeitkostanten gefiltert, d. h. gelöscht bzw. zumindest gedämpft. Durch diese beiden Tiefpassfilterungen werden diejenigen spektralen Anteile der beiden Produkte $i_\alpha \cdot i_\alpha \cdot i_\beta$ und $i_\beta \cdot i_\alpha \cdot i_\beta$, welche in der Größenordnung der Vielfachen der Rotorfrequenz, im Bereich der elektrischen Frequenz des Testsignals und auch darüber liegen, entsprechend der Zeitkonstante gefiltert. Eine entstehende Phasenverschiebung bezogen auf die zu ermittelnde Rotorposition wird bevorzugt kompensiert.

Bei den beiden Stromwerten $i_\alpha$ und $i_\beta$ und bei den daraus gebildeten Produkten und Quotienten handelt es sich um zeitabhängige Größen, welche bevorzugt in digitaler Form verarbeitet werden. Grundsätzlich kann auch eine analoge Umsetzung des Verfahrens erfolgen.

Das mehrphasige Testsignal weist bevorzugt eine Frequenz von mehr als 100 Hz auf. Die Frequenz beträgt besonders bevorzugt mindestens 1 kHz. Die Frequenz beträgt bevorzugt zwischen 100 Hz und 10 kHz. Bei weiteren bevorzugten Ausführungsformen beträgt die Frequenz zwischen 1 kHz und einem Viertel einer Schaltfrequenz eines bei digitaler Ansteuerung verwendeten Umrichters.

Die Drehfeldmaschine wird bevorzugt kontinuierlich mit dem mehrphasigen Testsignal beaufschlagt. Somit wird das mehrphasige Testsignal nicht impulsartig o. ä. aufgeschaltet.

Die Drehfrequenz des durch das Testsignal erzeugten Drehfeldes ist bevorzugt konstant. Somit weisen die einzelnen Phasen des mehrphasigen Testsignals gleiche elektrische Frequenzen auf, die sich zeitlich nicht ändern. Bei alternativen bevorzugten Ausführungsformen ist die Drehfrequenz des durch das Testsignal erzeugten Drehfeldes zeitlich variabel, insbesondere dadurch, dass die einzelnen Phasen des mehrphasigen Testsignals unterschiedliche elektrische Frequenzen aufweisen, die sich zeitlich nicht ändern. Das variable Drehfeld kann zu genaueren Messwerten der Winkelposition des Rotors führen.

Das zweiphasige System der Stromwerte $i_\alpha$ und $i_\beta$ ist bevorzugt durch ein zweiachsiges Koordinatensystem mit zueinander orthogonalen Koordinatenachsen gebildet. Dieses Koordinatensystem ruht gemeinsam mit dem Stator und wird für Drehfeldmaschinen als $\alpha/\beta$-Koordinatensystem angegeben.

Das Drehfeld wird bevorzugt dadurch erzeugt, dass das mehrphasige Testsignal bezogen auf seine Spannung in die Drehfeldmaschine, insbesondere in die Elektromagnetspulen des Stators der Drehfeldmaschine eingeprägt wird. Dieser Vorgang kann auch dadurch beschrieben werden, dass ein rotierender hochfrequenter Spannungsvektor in die Drehfeldmaschine eingeprägt wird.

Das mehrphasige Testsignal wird bevorzugt als ein pulsweitenmoduliertes Signal in die Drehfeldmaschine eingespeist.

Die erfindungsgemäße mehrphasige Drehfeldmaschine umfasst einen Stator und einen darin rotierbaren Rotor. Die Drehfeldmaschine besitzt n Phasen, nämlich n Elektromagnetspulen, die im Stator ausgebildet sind. Weiterhin umfasst die Drehfeldmaschine eine Messeinheit zum Bestimmen der Winkelposition des Rotors. Die Messeinheit bildet bevorzugt eine Komponente einer Einheit zur feldorientierten Regelung der Drehfeldmaschine. Erfindungsgemäß ist die Messeinheit zur Ausführung des erfindungsgemäßen Verfahrens konfiguriert. Bevorzugt ist die Messeinheit zur Ausführung bevorzugter Ausführungsformen des erfindungsgemäßen Verfahrens konfiguriert. Auch weist die Drehfeldmaschine bevorzugt solche Merkmale auf, die im Zusammenhang mit dem erfindungsgemäßen Verfahren beschrieben sind.

Weitere Vorteile, Einzelheiten und Weiterbildungen der Erfindung ergeben sich aus der nachfolgenden Beschreibung bevorzugter Ausführungsformen der Erfindung, unter Bezugnahme auf die Zeichnung. Es zeigen:

Fig. 1:    eine Querschnittsansicht einer Drehfeldmaschine mit einer Darstellung eines Koordinatensystems;

Fig. 2:    ein Blockschaltbild einer zweiphasigen Testsignaleinprägung gemäß dem erfindungsgemäßen Verfahren;

Fig. 3:    ein Blockschaltbild einer Messsignalverarbeitung gemäß dem erfindungsgemäßen Verfahren;

Fig. 4:    ein Diagramm mit zwei gemäß dem erfindungsgemäßen Verfahren bestimmten Positionssignalen einer rotierenden Drehfeldmaschine;

Fig. 5:    ein Diagramm mit zwei gemäß dem erfindungsgemäßen Verfahren bestimmten Positionssignalen bei temporärem Stillstand der Drehfeldmaschine;

Fig. 6:    einen Vergleich einer mit dem erfindungsgemäßen Verfahren bestimmten Winkelposition einer rotierenden Drehfeldmaschine mit einer anderweitig bestimmten Winkelposition;

Fig. 7:    einen Vergleich einer mit dem erfindungsgemäßen Verfahren bestimmten Winkelposition einer temporär stillstehenden Drehfeldmaschine mit einer anderweitig bestimmten Winkelposition;

Fig. 8:    eine Anwendung des erfindungsgemäßen Verfahrens zur Geberinitialisierung innerhalb einer Motorregelung; und

Fig. 9:    eine Anwendung des erfindungsgemäßen Verfahrens innerhalb einer Motorregelung ohne Lagegeber.

Fig. 1 zeigt eine Querschnittsansicht einer Drehfeldmaschine mit einer Darstellung eines Koordinatensystems. Es handelt sich dabei um eine dreiphasige Drehfeldmaschine mit den Phasen u, v, w. Jede der Phasen u, v, w ist durch eine Elektromagnetspule 01 auf einem Stator 02 gebildet. Im Stator 02 ist ein Rotor 03 mit Dauermagneten 04 angeordnet. Der Rotor 03 rotiert mit einer Winkelgeschwindigkeit $\omega$ gegenüber dem Stator 02.

Weiterhin ist ein zweiphasiges Koordinatensystem $\alpha$, $\beta$ dargestellt. Dieses Koordinatensystem ist in einer Ebene aufgespannt, welche senkrecht zur Rotationsachse der Drehfeldmaschine angeordnet ist.

Fig. 2 zeigt ein Blockschaltbild einer zweiphasigen Testsignaleinprägung gemäß dem erfindungsgemäßen Verfahren. Ein Testsignalgenerator 11 dient der Generierung eines hochfrequenten zweiphasigen Testsignals mit den Phasenspannungen $u_\alpha$ und $u_\beta$. Das Attribut "hochfrequent" ist in diesem Zusammenhang so zu verstehen, dass die Frequenz deutlich höher als eine Betriebsfrequenz der Drehfeldmaschine ist. Bei einer Betriebsfrequenz von z. B. 50 Hz ist die Frequenz des zweiphasigen Testsignals bevorzugt größer als ein Mehrfaches von 50 Hz, insbesondere größer als 1 kHz. Das zweiphasige hochfrequente Testsignal wird einem Pulsweitenmodulator 12 zugeführt. Das modulierte Testsignal mit den Phasenspannungen $u_\alpha$ und $u_\beta$ wird durch geeignete technische Mittel, bevorzugt durch einen Umrichter oder einen Wechselrichter in eine zweiphasige Drehfeldmaschine 13 eingespeist. Die Phasenspannungen $u_\alpha$ und $u_\beta$ erzeugen Phasenströme $i_\alpha$ und $i_\beta$, aus denen in einer Messsignalverarbeitungseinheit 14 ein Winkel $\varphi_{Rotor}$ des Rotors der Drehfeldmaschine bestimmt wird. Das Funktionsprinzip der Messsignalverarbeitungseinheit 14 ist in Fig. 3 dargestellt.

Die wesentlichen spektralen Komponenten der in der Drehfeldmaschine auftretenden Ströme lassen sich als komplexe Größe gemäß der nachfolgenden Formel angegeben:

$$i_S^S \approx i_{p1}e^{j\left(\omega_{hf}\cdot t - \frac{\pi}{2}\right)} + i_{n1}e^{j\left(-\omega_{hf}\cdot t + 2\omega_{Rotor}\cdot t + \varphi_{n1}\right)} + i_{p2}e^{j\left(2\omega_{hf}\cdot t - \omega_{Rotor}\cdot t + \varphi_{p2}\right)}$$

$$+ i_{n2}e^{j\left(-2\omega_{hf}\cdot t + 3\omega_{Rotor}\cdot t + \varphi_{n2}\right)}$$

Die komplexe Größe $i_S^S$ lässt sich wie folgt in die Phasenstromwerte $i_\alpha$ und $i_\beta$ zerlegen:

$$i_S^S = i_\alpha + j \cdot i_\beta$$

Die in Fig. 2 gezeigte Testsignaleinprägung ist zweiphasig bezogen auf das zweiphasige Koordinatensystem $\alpha$, $\beta$ (gezeigt in Fig. 1). Die gezeigte Testsignaleinprägung ist unmittelbar für eine zweiphasige Drehfeldmaschine anwendbar. Jedoch ist das gezeigte Prinzip der Testsignaleinprägung auch für Drehfeldmaschinen mit mehr als zwei Phasen anwendbar; beispielsweise für Drehfeldmaschinen mit drei Phasen (gezeigt in Fig. 1). Hierzu müssen die dreiphasigen Größen u, v, w in zweiphasige Größen konvertiert werden, beispielsweise mithilfe der Clarke-Transformation. In jedem Fall werden der Messsignalverarbeitungseinheit 14 die beiden Phasenstromwerte $i_\alpha$ und $i_\beta$ zugeführt, die unmittelbar gemessen oder durch Transformation bestimmt wurden.

Fig. 3 zeigt ein Blockschaltbild einer Messsignalverarbeitung gemäß dem erfindungsgemäßen Verfahren. Die beiden Phasenstromwerte $i_\alpha$ und $i_\beta$ werden zunächst jeweils mit einem Hochpass 16, 17 hochpassgefiltert. Die beiden sich gleichenden Hochpässe 16, 17 dienen dazu, insbesondere den Gleichanteil und die spektralen Signalanteile im Bereich der Betriebsfrequenz der Drehfeldmaschine zu entfernen. Jedoch sollen insbesondere amplitudenmodulierte Anteile von $i_\alpha$ und $i_\beta$ die Hochpässe 16, 17 passieren.

Die hochpassgefilterten Phasenstromwerte $i_\alpha$ und $i_\beta$ werden einem ersten Multiplikator 18 zugeführt, in welchem das Produkt $i_\alpha \cdot i_\beta$ gebildet wird, welches mit einem dritten Hochpass 19 hochpassgefiltert wird. Der dritte Hochpass 19 weist bevorzugt die gleiche Filterordnung und/oder die gleiche Zeitkonstante wie der erste Hochpass 16 und der zweite Hochpass 17 auf, jedoch kann er auch eine höhere Ordnung besitzen. Der dritte Hochpass 19 soll ebenso den Gleichanteil und die spektralen Signalanteile im Bereich der Betriebsfrequenz der Drehfeldmaschine aus dem Produkt $i_\alpha \cdot i_\beta$ entfernen.

Das Produkt $i_\alpha \cdot i_\beta$ wird einem zweiten Multiplikator 21 zugeführt, in welchem es mit dem hochpassgefilterten Phasenstromwert $i_\alpha$ zu dem Produkt $i_\alpha \cdot i_\alpha \cdot i_\beta$ multipliziert wird. Weiterhin wird das Produkt $i_\alpha \cdot i_\beta$ einem dritten Multiplikator 22 zugeführt, in welchem es mit dem hochpassgefilterten Phasenstromwert $i_\beta$ zu dem Produkt $i_\beta \cdot i_\alpha \cdot i_\beta$ multipliziert wird.

Die Produkte $i_\alpha \cdot i_\alpha \cdot i_\beta$ und $i_\beta \cdot i_\alpha \cdot i_\beta$ werden jeweils mit einem Tiefpass 23, 24 tiefpassgefiltert. Die beiden sich gleichenden Tiefpässe 23, 24 dienen u. a. der Filterung von Signalanteilen, die im Bereich der elektrischen Frequenz des Testsignals liegen, und der Filterung von Signalanteilen, welche in der Größenordnung der Vielfachen der Rotorfrequenz liegen.

Die tiefpassgefilterten Produkte $i_\alpha \cdot i_\alpha \cdot i_\beta$ und $i_\beta \cdot i_\alpha \cdot i_\beta$ werden als Quotient in einem Arkustangens-Operator 26 zur unmittelbaren Bestimmung der absoluten Winkelposition $\varphi_{Rotor}$ des Rotors der Drehfeldmaschine verwendet. Die Bestimmung erfolgt gemäß der nachfolgenden Formel:

$$\varphi_{Rotor} = \tan^{-1}\frac{i_\beta \cdot i_\alpha \cdot i_\beta}{i_\alpha \cdot i_\alpha \cdot i_\beta}$$

Da die Phasenstromwerte $i_\alpha$ und $i_\beta$ als komplexe Größen verarbeitet werden, führt die Arkustangensoperation unmittelbar zu einem absoluten Winkel $\varphi_{Rotor}$ zwischen 0° und 360°.

Fig. 4 zeigt beispielhaft ein Diagramm mit zwei gemäß dem erfindungsgemäßen Verfahren bestimmten Positionssignalen 31, 32 einer rotierenden Drehfeldmaschine. Bei den Positionssignalen 31 bzw. 32 handelt es sich um das mit Bezug auf Fig. 3 beschriebene tiefpassgefilterte Produkt $i_\alpha \cdot i_\alpha \cdot i_\beta$ bzw. das mit Bezug auf Fig. 3 beschriebene tiefpassgefilterte Produkt $i_\beta \cdot i_\alpha \cdot i_\beta$. Da die untersuchte Drehfeldmaschine permanent rotiert, zeigen die beiden Positionssignale 31, 32 einen durchgehenden sinusförmigen Verlauf.

Fig. 5 zeigt die in Fig. 4 gezeigten Positionssignale 31, 32 bei einem temporären Stillstand der ansonsten rotierenden Drehfeldmaschine. Während des temporären Stillstandes ist der sinusförmige Verlauf der Positionssignale 31, 32 unterbrochen, sodass die beiden Positionssignale 31, 32 in diesem zeitlichen Abschnitt jeweils durch einen Gleichanteil charakterisiert sind.

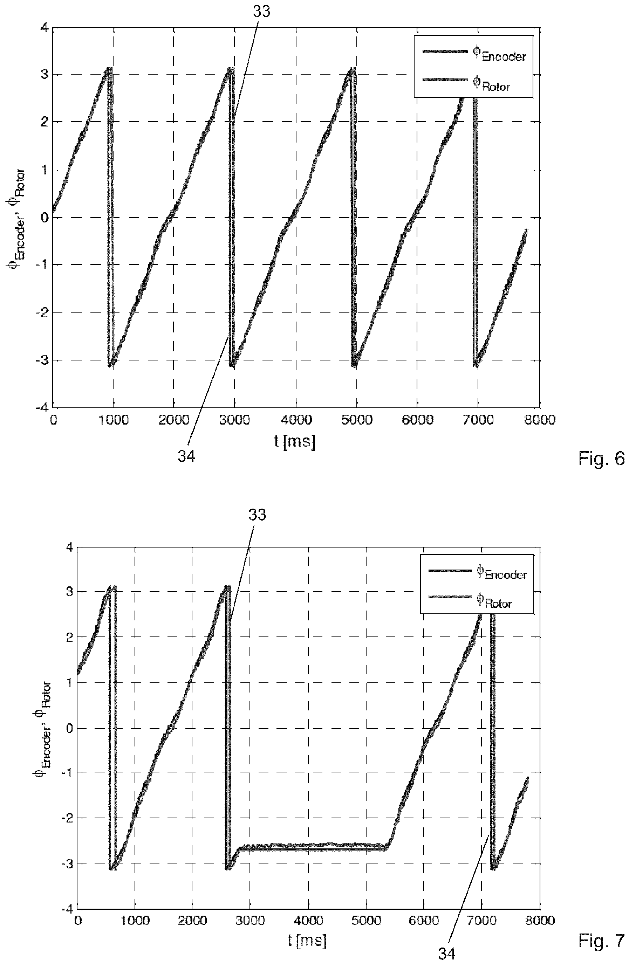

Fig. 6 zeigt einen Vergleich einer mit dem erfindungsgemäßen Verfahren bestimmten Winkelposition $\varphi_{Rotor}$ 33 des Rotors der Drehfeldmaschine mit einer mit einem Geber bestimmten Winkelposition $\varphi_{Encoder}$ 34 des Rotors der Drehfeldmaschine. Diese Darstellung verdeutlicht, dass das erfindungsgemäße Verfahren eine Bestimmung der Winkelposition des Rotors mit einer sehr ähnlichen Genauigkeit wie mit einem zusätzlichen in der Drehfeldmaschine montierten Geber ermöglicht. Ein solcher Geber ist somit erfindungsgemäß verzichtbar.

Fig. 7 zeigt die in Fig. 6 gezeigten Winkelpositionen $\varphi_{Rotor}$ 33 und $\varphi_{Encoder}$ 34 bei einem temporären Stillstand der ansonsten rotierenden Drehfeldmaschine. Diese Darstellung verdeutlicht, dass das erfindungsgemäße Verfahren auch dann eine ausreichend genaue Bestimmung der Winkelposition des Rotors ermöglicht, wenn sich der Rotor im Stillstand befindet.

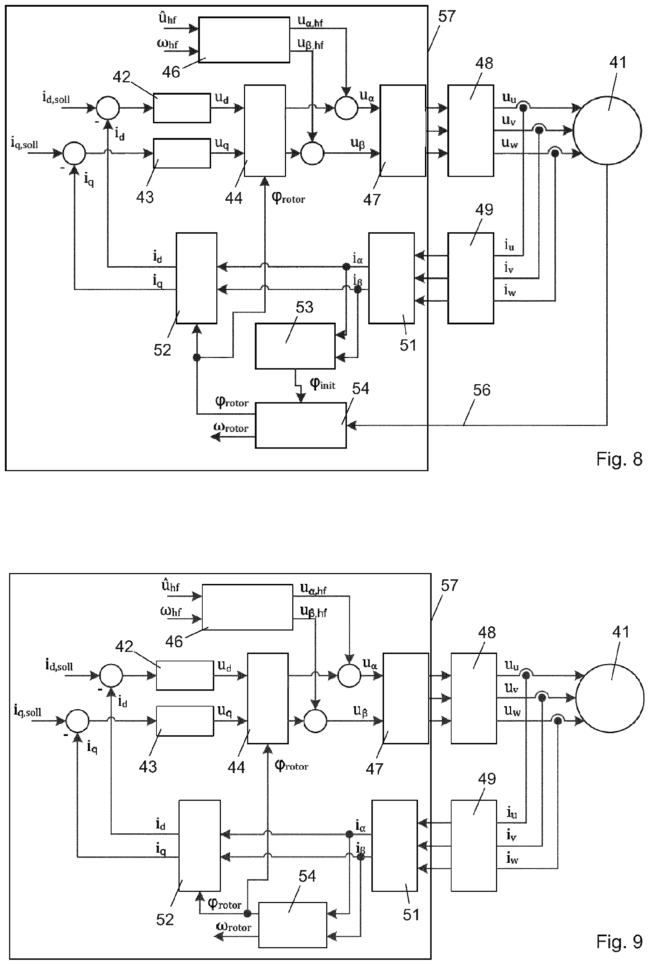

Fig. 8 zeigt eine Anwendung des erfindungsgemäßen Verfahrens zur Geberinitialisierung innerhalb einer Motorregelung einer Drehfeldmaschine 41 als Blockschaltbild. Ausgehend von zwei auf den Antrieb der Drehfeldmaschine 41 gerichteten Sollwerten $i_{d,soll}$ und $i_{q,soll}$ werden über zwei Regler 42, 43 und einen Vektordreher 44 (Parktransformation, Koordinatentransformation) zwei auf das zweiphasige Koordinatensystem $\alpha$, $\beta$ bezogene Phasenspannungen $u_\alpha$ und $u_\beta$ bestimmt. Diesen Phasenspannungen $u_\alpha$ und $u_\beta$ sind zwei Phasenspannungen $u_{\alpha,hf}$ und $u_{\beta,hf}$ eines hochfrequenten Testsignals überlagert, welches mit einem Testsignalgenerator 46 erzeugt wird.

Die Phasenspannungen $u_\alpha$ und $u_\beta$ werden in einem 2/3-Wandler 47 und einem Wechselrichter 48 zu dreiphasigen Phasenspannungen $u_u$, $u_v$, $u_w$ gewandelt, welche an die dreiphasige Drehfeldmaschine 41 angelegt werden. Die durch die Phasenspannungen $u_u$, $u_v$, $u_w$ in der Drehfeldmaschine 41 bewirkten Phasenströme $i_u$, $i_v$, $i_w$ werden mit einer Strommesseinheit 49 gemessen und mit einem 3/2-Wandler 51 in zwei Phasenstromwerte $i_\alpha$ und $i_\beta$ gewandelt. Die beiden Phasenstromwerte $i_\alpha$ und $i_\beta$ werden mit einem Vektordreher 52 in zwei Phasenstromwerte $i_d$ und $i_q$ gewandelt, die den Sollwerten $i_{d,soll}$ und $i_{q,soll}$ überlagert werden. Zudem werden die beiden Phasenstromwerte $i_\alpha$ und $i_\beta$ einer Gebeinitialisierung 53 zugeführt, in welcher die in Fig. 3 gezeigte Messsignalverarbeitung gemäß dem erfindungsgemäßen Verfahren erfolgt.

Im Ergebnis liegt die anfänglich gegebene absolute Winkelposition $\varphi_{init}$ des Rotors (nicht gezeigt) der Drehfeldmaschine 41 vor, welche zur Initialisierung einer Positionsmesseinheit 54 dient. In der Positionsmesseinheit 54 wird die absolute Winkelposition $\varphi_{Rotor}$ des Rotors ausgehend von der anfänglich gegebenen Winkelposition $\varphi_{init}$ und ausgehend von einem Gebersignal 56 eines in der Drehfeldmaschine 41 befindlichen inkrementellen Gebers (nicht gezeigt) ermittelt. Anstelle des inkrementellen Gebers kann auch ein anderer Lagegeber verwendet werden. Die ermittelte absolute Winkelposition $\varphi_{Rotor}$ des Rotors dient zur Regelung der Drehfeldmaschine und wird daher als Eingangssignal für die Vektordreher 44, 52 verwendet. Durch zeitliche Ableitung der Winkelposition $\varphi_{Rotor}$ des Rotors wird in der Positionsmesseinheit 54 weiterhin auch die Drehzahl $\omega_{Rotor}$ des Rotors bestimmt.

Die innerhalb eines Rahmens 57 dargestellten Komponenten sind vorzugsweise als Software in einem Mikrokontroller realisiert.

Fig. 9 zeigt eine Anwendung des erfindungsgemäßen Verfahrens innerhalb einer Motorregelung der Drehfeldmaschine 41 als Blockschaltbild. Die in Fig. 9 gezeigte Motorregelung gleicht zunächst der in Fig. 8 gezeigten Motorregelung. Im Unterschied zu dieser werden in der Positionsmesseinheit 54 ausschließlich die beiden Phasenstromwerte $i_\alpha$ und $i_\beta$ zur Bestimmung der absoluten Winkelposition $\varphi_{Rotor}$ des Rotors verwendet. Auf den in der Drehfeldmaschine 41 befindlichen inkrementellen Geber wird verzichtet. Entsprechend ist auch die Geberinitialisierung 53 (gezeigt in Fig. 8) nicht notwendig. Es ist ein Vorteil des erfindungsgemäßen Verfahrens, dass auf Positionsgeber in der Drehfeldmaschine 41 verzichtet werden kann.

**Bezugszeichenliste**

01 Elektromagnetspule
02 Stator
03 Rotor
04 Dauermagnet
05 -
10 -
11 Testsignalgenerator
12 Pulsweitenmodulator
13 Drehfeldmaschine
14 Messsignalverarbeitungseinheit
15 -
16 erster Hochpass
17 zweiter Hochpass
18 erster Multiplikator
19 dritter Hochpass
20 -
21 zweiter Multiplikator
22 dritter Multiplikator
23 erster Tiefpass
24 zweiter Tiefpass
25 -
26 Arkustangens-Operator
27 -
30 -
31 Positionssignal $i_\alpha \cdot i_\alpha \cdot i_\beta$
32 Positionssignal $i_\beta \cdot i_\alpha \cdot i_\beta$
33 Winkelposition $\varphi_{Rotor}$
34 Winkelposition $\varphi_{Encoder}$
35 -
40 -
41 Drehfeldmaschine
42 Regler
43 Regler
44 Vektordreher
45 -
46 Testsignalgenerator
47 2/3-Wandler
48 Wechselrichter
49 Strommesseinheit
50 -
51 3/2-Wandler
52 Vektordreher
53 Geberinitialisierung
54 Positionsmesseinheit
55 -
56 Gebersignal
57 Rahmen

**Patentansprüche**

1. Verfahren zum Bestimmen der absoluten Winkelposition eines Rotors (03) einer mehrphasigen Drehfeldmaschine (13, 41), folgende Schritte umfassend:

- Erzeugen eines Drehfeldes durch Einspeisen eines mehrphasigen Testsignals in die Drehfeldmaschine;
- Messen der durch das mehrphasige Testsignal in der Drehfeldmaschine bewirkten Phasenströme;
- Bestimmen zweier auf ein zweiphasiges System bezogener Stromwerte $i_\alpha$ und $i_\beta$ aus den gemessenen Phasenströmen, wobei das zweiphasige System gemeinsam mit einem Stator (02) der Drehfeldmaschine (13, 41) ruht;
- Bilden von zwei Produkten $i_\alpha \cdot i_\alpha \cdot i_\beta$ und $i_\beta \cdot i_\alpha \cdot i_\beta$, wobei die Stromwerte $i_\alpha$ und $i_\beta$ vor der Produktbildung jeweils mit einem Hochpass (16; 17) gefiltert werden; und
- Bestimmen eines Arkusfunktionswertes für einen Quotienten aus den gebildeten Produkten, wobei die gebildeten Produkte $i_\alpha \cdot i_\alpha \cdot i_\beta$ und $i_\beta \cdot i_\alpha \cdot i_\beta$ vor der Bestimmung ihres Quotienten jeweils mit einem Tiefpass (23, 24) gefiltert werden;

**dadurch gekennzeichnet, dass** für das Bilden der Produkte $i_\alpha \cdot i_\alpha \cdot i_\beta$ bzw. $i_\beta \cdot i_\alpha \cdot i_\beta$ zunächst das Zwischenprodukt $i_\alpha \cdot i_\beta$ gebildet wird, welches nachfolgend mit dem Faktor $i_\alpha$ bzw. $i_\beta$ multipliziert wird, wobei das Zwischenprodukt $i_\alpha \cdot i_\beta$ vor der weiteren Produktbildung mit einem Hochpass (19) gefiltert wird.

2. Verfahren nach Anspruch 1, **dadurch gekennzeichnet, dass** das mehrphasige Testsignal eine Frequenz zwischen 100 Hz und 10 kHz aufweist.

3. Verfahren nach Anspruch 1 oder 2, **dadurch gekennzeichnet, dass** die Drehfrequenz des Drehfeldes konstant ist.

4. Verfahren nach Anspruch 1 oder 2, **dadurch gekennzeichnet, dass** die Drehfrequenz des Drehfeldes variabel ist.

5. Verfahren nach einem der Ansprüche 1 bis 4, **dadurch gekennzeichnet, dass** die Drehfeldmaschine (41) dreiphasig ausgebildet ist und dass das Bestimmen der beiden auf das zweiphasige System bezogenen Stromwerte $i_\alpha$ und $i_\beta$ aus den gemessenen drei Phasenströmen dadurch erfolgt, dass eine Clarke-Transformation auf die gemessenen drei Phasenströme angewendet wird.

## Claims

1. A method for determining the absolute angular position of a rotor (03) of a polyphase rotating field machine (13, 41), comprising the following steps:

   - generating a rotating field by feeding a polyphase test signal into the rotating field machine;
   - measuring the phase currents produced in the rotating field machine by the polyphase test signal;
   - determining two current values $i_\alpha$ and $i_\beta$ relating to a two-phase system from the measured phase currents, the two-phase system being stationary together with a stator (02) of the rotating field machine (13, 41);
   - forming two products $i_\alpha \cdot i_\alpha \cdot i_\beta$ and $i_\beta \cdot i_\alpha \cdot i_\beta$, the current values $i_\alpha$ and $i_\beta$ each being filtered with a high-pass filter (16; 17) before product formation; and
   - determining an arc function value for a quotient of the formed products, the formed products $i_\alpha \cdot i_\alpha \cdot i_\beta$ and $i_\beta \cdot i_\alpha \cdot i_\beta$ each being filtered with a low-pass filter (23, 24) before the quotient thereof is determined;

   **characterised in that**, to form the products $i_\alpha \cdot i_\alpha \cdot i_\beta$ and $i_\beta \cdot i_\alpha \cdot i_\beta$, first the intermediate product $i_\alpha \cdot i_\beta$ is formed, which is then multiplied by the factor $i_\alpha$ or $i_\beta$, wherein the intermediate product $i_\alpha \cdot i_\beta$ is filtered with a high-pass filter (19) before further product formation.

2. The method according to Claim 1, **characterised in that** the polyphase test signal has a frequency between 100 Hz and 10 kHz.

3. The method according to Claim 1 or 2, **characterised in that** the rotation frequency of the rotating field is constant.

4. The method according to Claim 1 or 2, **characterised in that** the rotation frequency of the rotating field is variable.

5. The method according to any one of Claims 1 to 4, **characterised in that** the rotating field machine (41) has three phases, and the two current values $i_\alpha$ and $i_\beta$ relating to the two-phase system are determined from the three measured phase currents **in that** a Clarke transformation is applied to the three measured phase currents.

**Revendications**

1. Procédé pour déterminer la position angulaire absolue d'un rotor (03) d'un générateur à induction polyphasé (13,41), comprenant les étapes suivantes :

   - production d'un champ rotatif par alimentation d'un signal d'essai polyphasé dans le générateur à induction
   - mesure des courants de phase causés par le signal d'essai polyphasé dans le générateur à induction,
   - détermination de deux valeurs de courant $i_\alpha$ et $i_\beta$ basées sur un système biphasé à partir des courants de phase mesurés, le système biphasé reposant en commun avec un stator (02) du générateur à induction (13,41),
   - formation de deux produits $i_\alpha \cdot i_\alpha \cdot i_\beta$ et $i_\beta \cdot i_\alpha \cdot i_\beta$, les valeurs de courant $i_\alpha$ et $i_\beta$ étant filtrées respectivement avant la formation de produit avec un filtre passe-haut (16,17), et
   - détermination d'une valeur de fonction cyclométrique pour un quotient à partir des produits formés, les produits formés $i_\alpha \cdot i_\alpha \cdot i_\beta$ et $i_\beta \cdot i_a \cdot i_\beta$ étant respectivement filtrés avant la détermination de leur quotient avec un filtre passe-bas (23,24),

   **caractérisé en ce que** pour la formation des produits $i_\alpha \cdot i_\alpha \cdot i_\beta$ et $i_\beta \cdot i_\alpha \cdot i_\beta$ le produit intermédiaire $i_\alpha \cdot i_\beta$ est d'abord formé, lequel est ensuite multiplié par le facteur $i_\alpha$ ou $i_\beta$, le produit intermédiaire $i_\alpha \cdot i_\beta$ étant filtré avant la formation de produit ultérieure avec un filtre passe-haut (19).

2. Procédé selon la revendication 1, **caractérisé en ce que** le signal d'essai polyphasé comporte une fréquence se situant entre 100 Hz et 10 Hz.

3. Procédé selon la revendication 1 ou 2, **caractérisé en ce que** la fréquence de rotation du champ rotatif est constante.

4. Procédé selon la revendication 1 ou 2, **caractérisé en ce que** la fréquence de rotation du champ rotatif est variable.

5. Procédé selon l'une quelconque des revendication 1 à 4, **caractérisé en ce que** le générateur à induction (41) est constitué triphasé et **en ce que** la détermination des deux valeurs de courant $i_\alpha$ et $i_\beta$ basées sur le système biphasé a lieu à partir des trois courants de phases mesurés par le fait qu'une transformation de Clarke est appliquée aux trois courants de phases mesurés.

Fig. 1

Fig. 2

$\varphi_{rotor}$

Fig. 3

Fig. 4

Fig. 5

Fig. 6

Fig. 7

Fig. 8

Fig. 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2011026988 A2
- WO 2004019269 A2
- WO 0239575 A2
- EP 1944860 B9
- US 7034497 B2
- DE 102007003874 A1
- DE 102006004034 A1
- US 8159161 B2
- DE 10327599 A1

### In der Beschreibung aufgeführte Nicht-Patentliteratur

- Feldorientierte Regelung der permanenterregten Synchronmaschine ohne Lagegeber für den gesamten Drehzahlbereich bis zum Stillstand. **PERASSI, H. D.** Technische Universität Ilmenau. ISLE Verlag Ilmenau, 2007
- **KIM, H. ; HUH, K.-K. ; LORENZ, R. D. ; JAHNS, T. M.** A Novel Method for Initial Rotor Position Estimation for IPM Synchronous Machine Drives. *IEEE Trans. On Ind. Appl.,* 2004, vol. 40 (5
- **HARKE, M. C. ; RACA, D. ; LORENZ, R. D.** Implementation Issues for Fast Initial Position and Magnet Polarity Identification of PM Synchronous Machines with Near Zero Saliency. *European Conference on Power Electronics and Applications,* 2005
- **SILVA, C. et al.** Sensorless Rotor Position Control in a Surface Mounted PM Machine Using HF Rotation Injection. *EPE Journal,* 01. August 2003, vol. 13 (3), 12-18